# EUROPÄISCHE PATENTSCHRIFT

(11) **EP 2 028 048 B1**
(45) Veröffentlichungstag und Bekanntmachung des Hinweises auf die Patenterteilung: **27.04.2011**
(21) Anmeldenummer: 07016440.5
(22) Anmeldetag: 22.08.2007
(51) Int. Cl.: B60Q 3/02, B60Q 1/32, B60R 13/04, G09F 13/18, G09F 21/04, G02B 6/00

(54) **Dekorationskörper mit beleuchtbaren Dekorelementen**
Decorative body with illuminable decor elements
Corps de décoration doté d'éléments de décoration pouvant être éclairés

(43) Veröffentlichungstag der Anmeldung: 25.02.2009
(73) Patentinhaber: CCL Design GmbH, 42653 Solingen (DE)
(72) Erfinder: Fleissner, Peter, 55232 Alzey (DE)
(74) Vertreter: Paul, Dieter-Alfred

(56) Entgegenhaltungen:
- EP-A- 1 662 277
- EP-A- 1 715 244
- DE-A1- 10 102 774
- DE-U1-202004 008 681
- US-A1- 2002 001 055

## Beschreibung

Die Erfindung betrifft einen Dekorationskörper mit beleuchtbaren Dekorelementen, insbesondere eine Einstiegsleiste zur Anordnung an einer Karosserie eines Fahrzeuges, vorzugsweise im Bereich eines Einstiegsschwellers, umfassend eine Lichtleitschicht, in die durch ein seitlich angeordnetes Leuchtmittel Licht einstrahlbar ist, eine über der Lichtleitschicht angeordnete lichtabdeckende Dekorelementschicht mit lichtundurchlässigen und -durchlässigen Bereichen, die entsprechend den Dekorelementen ausgebildet sind, und eine unter der Lichtleitschicht angeordnete Reflexionsschicht.

Einen ähnlichen Gegenstand beschreibt das deutsche Gebrauchsmuster DE 202 19 391 U1. Es handelt sich dabei um eine Dekorationsleiste mit Symbolen, mit einem an der Karosserie eines Kraftfahrzeugs befestigbaren Trägerformteil, einer auf dem Trägerformteil angeordneten elektrolumineszierenden Leuchtfolie und einer mittel- oder unmittelbar auf die Leuchtfolie aufgebrachten lichtabdeckenden Symbolschicht mit lichtdurchlässigen Bereichen, die entsprechend den Symbolen als Dekorelemente ausgebildet sind. Diese bekannte Dekorationsleiste gestattet es, einen beleuchteten Schriftzug oder andere beleuchtete Symbole kostengünstig und rationell herstellbar auszubilden, wobei eine große Variabilität sowie ein gutes optisches Erscheinungsbild gegeben sind. Die Dekorationsleiste hat sich in der Praxis bewährt, unterscheidet sich jedoch von einem Dekorationskörper der eingangs genannten Art dadurch, dass sie keine Lichtleitschicht, in die durch ein seitlich angeordnetes Leuchtmittel Licht einstrahlbar ist, umfasst, sondern eine elektrolumineszierende Leuchtfolie.

Ein Dekorationskörper der eingangs genannten Art ist aus der US 2001/0040393 A1 bekannt. Dieses Dokument beschreibt eine Beleuchtungsplatte für ein Kraftfahrzeug, welche eine lichtleitende Platte und eine Abdeckung umfasst, in der sich zumindest ein lichtdurchlässiges Fenster befindet. Eine des Weiteren vorhandene Reflexionsschicht ist an der Rück- bzw. Unterseite der lichtleltenden Platte ausgebildet und besteht aus einer weißen, lichtreflektierenden Tinte, einer PVD- oder CVD-Schicht oder aus einem weißen Band. Alternativ kann diese Schicht auch durch Ätzen, Sandstrahlen oder Elektroerosion hergestellt werden. Die Reflexionsschicht ist geringfügig größer als das lichtdurchlässige Fenster ausgebildet. Sie erstreckt sich folglich nicht über die gesamte Rückseite der lichtleitenden Platte, sondern nur über bestimmte Bereiche derselben. Damit soll eine hohe Gleichmäßigkeit bei der Abstrahlung des Lichtes erreicht werden, was jedoch insbesondere bei großflächigen Beleuchtungsplatten nicht vollständig gelingt. Es zeigt sich vielmehr nachteiligerweise, dass die Intensität des durch das mindestens eine Fenster bzw. durch mehrere vorhandene Fenster abgestrahlten Lichtes mit zunehmendem Abstand vom Leuchtmittel schwächer wird. Aus DE 20 2004 008 681 U ist ein gattungsmäßiger Dekorationskörper mit beleuchtbaren Dekorelementen bekannt.

Der vorliegenden Erfindung liegt die Aufgabe zugrunde, einen Dekorationskörper der eingangs genannten Art mit einer gleichmäßigeren Intensitätsverteilung des abgestrahlten Lichts anzugeben, wobei Letzteres insbesondere auch bei größeren Flächen, d. h. mit einem Flächeninhalt von mehr als 100 cm² gewährleistet sein soll.

Erfindungsgemäß wird dies durch einen Dekorationskörper der eingangs genannten Art erreicht, bei dem zwischen der Lichtleitschicht und der darüber angeordneten lichtabdeckenden Dekorelementschicht eine lichtdurchlässige Streuschicht angeordnet ist, die eine grobe Fraktion von Partikeln mit einer mittleren Korngröße in Bereich von 51 bis 120 µm, vorzugsweise von 60 bis 90 µm enthält.

Diese Streuschicht verhindert, dass Einzelheiten der unter der Lichtleitschicht liegenden Reflexionsschicht, insbesondere ein - wie noch im Einzelnen dargestellt werden wird - dort vorhandenes Raster von Bildpunkten in der Draufsicht sichtbar ist. Gleichzeitig wird damit auch vermieden, dass sich durch eine Interferenz an dünnen Schichten Newtonsche Ringe bilden können.

Zu diesem Zweck kann die lichtdurchlässige Streuschicht insbesondere einen arithmetischen Mittenrauhwert Rₐ von 5,0 bis 20,0 µm aufweisen. Zur Bildung der lichtdurchlässigen Streuschicht ist es dabei in technologisch wenig aufwändiger Weise mit Vorteil möglich, einem Ätzimitatlack einzusetzen, der auf die Lichtleitschicht aufgetragen werden kann.

Weitere vorteilhafte Ausgestaltungsmerkmale der Erfindung sind in den Unteransprüchen sowie der folgenden Beschreibung enthalten.

Anhand eines in der Zeichnung dargesteilten, bevorzugten Ausführungsbeispiels soll im Folgenden die Erfindung näher erläutert werden.

Dabei zeigen:
- Fig. 1: eine perspektivische Explosionsdarstellung einer ersten Ausführungs- form eines erfindungsgemäßen Dekorationskörpers mit beleuchtbaren Dekorelementen,
- Fig. 2: eine perspektivische Explosionsdarstellung einer zweiten Ausführungs- form eines erfindungsgemäßen Dekorationskörpers,
- Fig. 3: in vergrößerter Aufsicht eine Einzeldarstellung einer Reflexionsschicht eines erfindungsgemäßen Dekorationskörpers,
- Fig. 4: in vergrößerter perspektivischer Querschnittsansicht, eine schematisierte Darstellung eines Ausschnitts aus einer alternativ ausgebildeten Lichtleit- schicht eines erfindungsgemäßen Dekorationskörpers.

In den verschiedenen Figuren der Zeichnung sind gleiche Teile stets auch mit den gleichen Bezugszeichen versehen, so dass sie in der Regel auch jeweils nur einmal beschrieben werden.

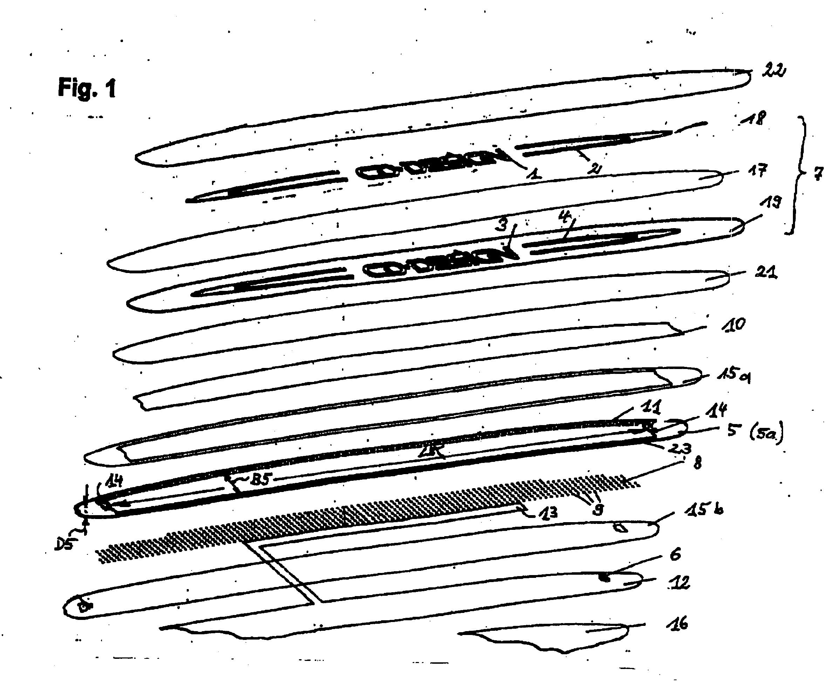

Fig. 1 zeigt zunächst einen erfindungsgemäßen Dekorationskörper, welcher beleuchtbare Dekorelemente 1, 2, 3, 4 aufweist. Diese sind beispielsweise jeweils als Schriftzug "CO-DESIGN" 1, 3 und als sichelförmiges Schmuckomament 2, 4 ausgebildet.

Bei dem erfindungsgemäßen Dekorationskörper kann es sich insbesondere um eine Einstiegsieiste zur Anordnung an einer Karosserie eines Fahrzeuges, vorzugsweise im Bereich eines Einstiegsschwellers handeln.

Wie dargestellt, umfasst der erfindungsgemäße Dekorationskörper eine Lichtleitschicht 5, in die durch ein seltlich angeordnetes Leuchtmittel 6 Licht einstrahlbar ist. Bei dem Leuchtmittel 6 kann es sich dabei bevorzugt um eine - oder wie dargestellt um zwei - oder mehr lichternittierende Dioden (LED) handeln.

Der erfindungsgemäße Dekorationskörper umfasst des Weiteren eine über der Lichtleitschicht 5 angeordnete, aus mehreren - nachstehend noch im Detail erläuterten - Teilschichten bestehende lichtabdeckende Dekorelementschicht 7 mit lichtundurchlässigen und durchlässigen Bereichen, die entsprechend den Dekorelementen 1, 2, 3, 4 ausgebildet sind, sowie eine unter der Lichtleitschicht 5 angeordnete Reflexionsschicht 8.

Die Reflexionsschicht 8 ist aus einer Vielzahl von Bildpunkten 9 unterschiedlicher Dichte, Größe und/oder Lichtreflektivität gebildet. Dabei ist es vorteilhafterweise möglich, bei geringem Lichtverlust die zur Beleuchtung der Dekorelemente 1, 2, 3, 4 nach oben ausgekoppelte Lichtintensität zu steuern und bezogen auf die Fläche des erfindungsgemäßen Dekorationskörpers äußerst gleichmäßig zu gestalten. Dazu kann z. B. auch ein Flächendeckungsgrad der Bildpunkte 9 gezielt, vorzugsweise im Bereich von 20 bis 80 Prozent, variiert werden. Somit ist es problemlos möglich, mit nur - wie dargestellt - zwei diametral einander gegenüber liegenden LED's eine Fläche von mindestens 150 cm² gleichmäßig auszuleuchten.

Die Reflexionsschicht 8 kann insbesondere aus einer auf die Unterseite der Lichtleitschicht 5 aufgebrachten Druckschicht, vorzugsweise aus einer im Siebdruckverfahren aufgebrachten Druckschicht, oder auch durch eine Gravur in der Lichtleitschicht 5 gebildet sein.

Obwohl es bevorzugt ist, im Falle eines Druckes wegen der vorteilhaft geringen Lichtabsorption weiße Farbe einzusetzen, könnte die Lichtreflektivität - außer durch eine Dicke der Druckschicht - auch durch einen von Weiß abweichenden Farbton gesteuert werden.

Ein Raster der Bildpunkte 9 kann entsprechend dem physiologischen Auflösungsvermögen des menschlichen Auges und entsprechend dem bevorzugten Einsatzfall des erfindungsgemäßen Dekorationskörpers festgelegt werden. Da das Auge in einem Betrachtungsabstand von etwa einem halben Meter noch Strukturen bis zu 0,3 mm auflösen kann, sollte das Raster der Bildpunkte 9 im Bereich von 18 bis 120 pro cm, vorzugsweise im Bereich von 36 bis 80 pro cm, liegen. Dadurch werden die - zwar In diskretisierter Form vorliegenden - Änderungen von Dichte, Größe und/oder Lichtreflektivität der Bildpunkte 9 vom Auge als quasikontinuierlich erfasst. Eine höhere Rasterdichte als 120 pro cm erscheint allerdings nicht sinnvoll, weil der technologische Aufwand zur Herstellung des Rasters überproportional zur erzielten optischen Güte bzw. Homogenität der Ausleuchtung anwachsen würde.

Zur Steuerung einer - auf die zeichnerische Darstellung bezogen nach oben - ausgekoppelten Lichtrnenge bzw. Intensität kann vorgesehen sein, dass die Dichte, Größe und/oder Lichtreflektivität der Bildpunkte 9 in Abhängigkeit von der Geometrie der Lichtleitschicht 5, wie deren (optisch wirksame) Länge L5, Breite B5 und Dicke D5, eingestellt ist. Außerdem ist es auch möglich, die Dichte, Größe und/oder Lichtreflektivität der Bildpunkte 9 auf die optischen Eigenschaften des Werkstoffes der Lichtleitschicht 5, wie dessen Absorptionsvermögen oder Brechungsindex, abzustimmen.

Ebenso kann des Weiteren der Helligkeit des Leuchtmittels 6 Rechnung getragen werden, indem die Dichte, Größe und/oder Lichtreflektivität der Bildpunkte bei größerer Helligkeit geringer gewählt werden kann als bei geringerer Helligkeit.

Auch kann die Dichte, Größe und/oder Lichtreflektivität der Bildpunkte 9 unterhalb der lichtundurchlässigen Bereiche der lichtabdeckenden Dekorelementschicht 7 geringer sein als unterhalb der lichtdurchlässigen Bereiche, wobei - einem nicht senkrechten Austreten des Lichtes entsprechend - auch ein die lichtdurchlässigen Bereiche umgebender abgedeckter Rand eine verglelchsweise höhere Dichte, Größe und/oder Lichtreflektivität der Bildpunkte 9 aufwelsen kann als die übrige abgedeckte Umgebung.

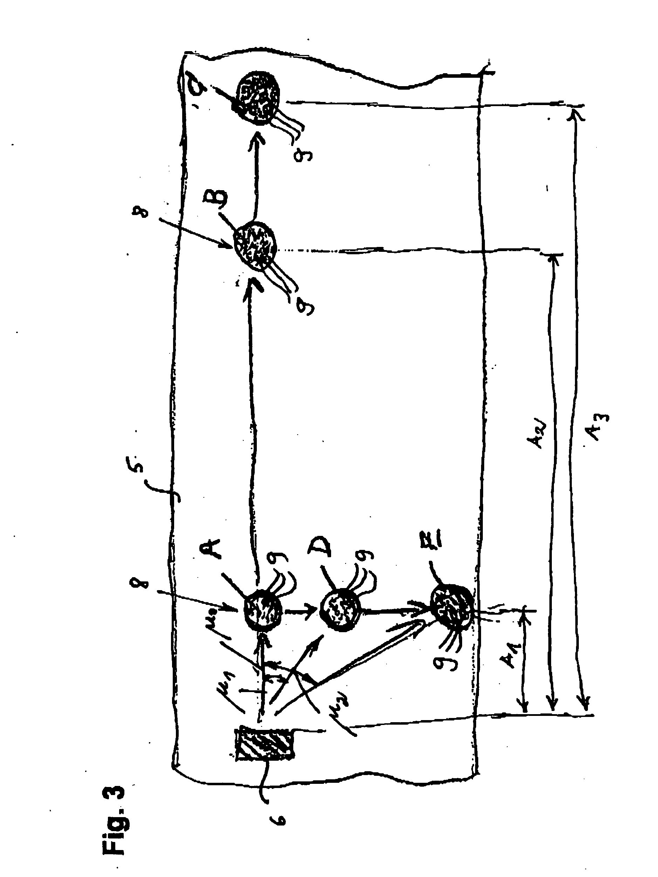

Schließlich bestehen noch weitere Möglichkeiten zur Steuerung des abgestrahlten Lichtes, die durch Fig. 3 veranschaulicht werden. So kann mit Vorteil vorgesehen sein, dass die Dichte, Größe und/oder Lichtreflektivität der Bildpunkte 9 der ausschnittsweise dargestellten Reflexionsschicht 8 in Abhängigkeit von ihrem Abstand A₁, A₂, A₃ zum Leuchtmittel 6 eingestellt sind, insbesondere bei größerem Abstand A₂ (Bereiche B und C), A₃ vom Leuchtmittel 6 größer ist als bei kleinerem Abstand A₁ (Bereiche A, D, E) vom Leuchtmittel 6.

Falls es sich aber bei dem Bereich C um einen abgedeckten Bereich handelt, könnten dort - wie bereits ausgeführt - trotz des größeren Abstands (A₃ > A₂) die Dichte, Größe und/oder Lichtreflektivität der Bildpunkte 9 kleiner sein als im Bereich B, wenn dieser kein abgedeckter Bereich ist.

Fig. 3 zeigt auch, dass es mit Vorteil möglich ist, die Dichte, Größe und/oder Lichtreflektivität der Bildpunkte 9 in Abhängigkeit von ihrer Winkellage zum Leuchtmittel 6 einzustellen, wobei diese insbesondere bei einer größeren Winkellage µ₂ von der senkrechten Abstrahlungsrichtung des Leuchtmittels 6 (im Bereich E) größer sein sollte als bei einer kleineren Winkellage µ₁ zur Abstrahlungsrichtung des Leuchtmittels 6 (Bereich D) oder direkt in Abstrahlungsrichtung (Bereich A).

Falls es sich aber beispielsweise bei dem Bereich A um einen abgedeckten Bereich handelt, könnten dort trotz der Winkellage µ₀ = 0° die Dichte, Größe und/oder Lichtreflektivität der Bildpunkte 9 größer sein als im Bereich D, wenn dieser kein abgedeckter Bereich ist.

Erfindungsgemäß ist zur Erzielung einer gleichmäßigeren Intensitätsverteilung des abgestrahlten Lichts und zur Gewährleistung geringer Lichtverluste bei der Lichtabstrahlung zwischen der Lichtieitschicht 5 und der darüber angeordneten lichtabdeckenden Dekorelementschicht 7 eine lichtdurchlässige Streuschicht 10 angeordnet. Diese Streuschicht 10 verhindert, dass das Raster der Bildpunkte 9 in der Draufsicht sichtbar ist, und gleichzeitig wird damit auch vermieden, dass sich durch eine Interferenz an dünnen Schichten Newtonsche Ringe bilden können. Zu diesem Zweck weist die lichtdurchlässige Streuschicht 10 insbesondere einen arithmetischen Mittenrauhwert Rₐ von 5,0 bis 20,0 µm, vorzugsweise von 8,0 bis 14,0 µm, auf. Optimale Ergebnisse wurden bei einem Mittenrauhwert Rₐ von 11,7 µm erzielt.

Die lichtdurchlässige Streuschicht 10 sollte im Sinne einer hohen Lichtausbeute für die illuminierung der Dekorelemente 1, 2, 3, 4 einen Transmissionsgrad von mindestens 0,5, vorzugsweise von mindestens 0,8, aufweisen. Dabei beruht ihre Wirkung weniger auf einer Eintrübung, als vielmehr auf einer Lichtstreuung, d. h, das Licht erhält beim Durchgang durch die Streuschicht 10 einen Strahlengang mit einem hohen Anteil ungerichteter, diffuser Strahlungskomponenten.

Zur Bildung der lichtdurchlässigen Streuschicht 10 ist es in technologisch wenig aufwändiger Weise mit Vorteil möglich, einen Ätzimitatlack einzusetzen, der auf die Lichtleitschicht 5 aufgetragen werden kann. Die lichtdurchlässige Streuschicht 10 kann dabei eine grobe Fraktion von Partikeln mit einer mittleren Komgröße im Bereich von 30 bis 120 µm, vorzugsweise von 60 bis 90 µm, enthalten. Außerdern kann vorgesehen sein, dass die lichtdurchlässige Streuschicht eine feine Fraktion von Partikeln mit einer mittleren Korngröße im Bereich von weniger als 15 µm enthält.

Die feine Fraktion wiederum kann bevorzugt ein Gemisch aus einer ersten Teilfraktion von Partikeln mit einer mittleren Korngröße im Bereich von 1,8 bis 2,4 µm und aus einer zweiten Teilfraktion von Partikeln mit einer mittleren Korngröße im Berelch von 8,0 bis 12,0 µm sein, wobei die feine Fraktion insbesondere ein Gemisch aus 35 bis 65 Teilen der ersten Teilfraktion und 65 bis 35 Teilen der zweiten Teilfraktion ist und vorzugsweise je zur Hälfte aus den beiden Teilfraktionen besteht.

Insgesamt kann dann mit Vorteil vorgesehen sein, dass die lichtdurchlässige Streuschicht zu 60 bis 95 Prozent, vorzugsweise zu 78 bis 93 Prozent, aus einem Lack, zu 2,5 bis 20 Prozent aus der groben Fraktion von Partikeln mit einer mittleren Korngröße im Bereich von 30 bis 120 µm und zu 2,5 bis 20 Prozent aus der feinen Fraktion von Partikeln mit einer mittleren Korngröße im Bereich von weniger als 15 µm besteht.

Einerseits kann auf diese Weise der gewünschte Effekt erreicht, jedoch die Einstellung einer unerwünscht hohen Opazität und das Auftreten von Opaleszenz gänzlich vermieden werden.

Optimale Ergebnisse wurden mit einer Rezeptur erreicht, die zu 88 Prozent aus einem Ätzimitatlack, zu 6 Prozent aus einer ersten Pigmentfraktion mit einer - wie hier als üblich angenommen normalverteilten - Komgröße im Bereich von 60 bis 90 µm und zu weiteren 6 Prozent aus einer zweiten Pigmentfraktion bestand, die jeweils zu gleichen Teilen aus einer ersten Teilfraktion mit einer mittleren Korngröße von 2,1 µm und aus einer zweiten Teilfraktion mit einer mittleren Korngröße von 10,0 µm bestand. Der Auftrag erfolgte im Siebdruck mit einem 43er Gewebe (43 x 43 Maschen pro cm²).

Die Lichtleitschicht 5 und die lichtabdeckende Dekorelementschicht 7 können - wie in Fig. 1 dargestellt - mit Vorteil durch Kleben, insbesondere mittels einer, vorzugswelse ausschließlich am Rand (an der Lichtleitschicht 5 mit dem Bezugszeichen 11 bezeichnet) unter Einfassung der Streuschicht angeordneten, doppeltwirkenden Selbstklebefolie 15a, verbunden werden.

Unter der Lichtleitschicht 5 kann, wie gezeigt, ein flexibler Leiter 12 (Flexible Printed Circuit - FPC) angeordnet sein, der insbesondere einen nahtlos abgehenden Anschlussleiter 13 aufweist. Der flexible Leiter 12 kann, vorzugsweise auf seiner Oberfläche, mit allen zur illuminierung erforderlichen Bauteilen, insbesondere mit dem Leuchtmittel 6, wie einer oder mehreren lichtemittierenden Dioden (LED), bestückt sein. Bis auf die LED's können diese Bauteile aber auch an anderer Stelle, z. B. an einem nicht dargestellten Verbindungsstecker, untergebracht werden.

Die Lichtleitschicht 5 kann wiederum in komplementärer Weise Aufnahmetaschen 14 für die zur Illuminierung erforderliche Bauteile, insbesondere für das bzw. die Leuchtmittel 6, aufweisen. Dabei können die zur illuminierung erforderlichen Bauteile, wie die dargestellten lichtemittierenden Dioden 6, in die Lichtleitschicht 5 mittels eines transparenten Vergussmaterial eingegossen sein. Lichtleiter und Bauelemente werden dadurch zu einer Einheit verbunden.

Die Lichtleitschicht 5 und der flexible Leiter 12 sind mit Vorteil durch Kleben, insbesondere mittels einer vollflächig auf der Lichtleitschicht 5 und dem flexiblen Leiter 12 aufliegenden doppeltwirkenden Selbstklebefolie 15b, verbindbar.

Unterseitig des erfindungsgemäßen Dekorationskörpers kann zur Verbindung mit der Karosserie des Fahrzeuges, insbesondere an der Unterseite des flexiblen Leiters 12, eine weitere Klebeschicht 16, vorzugsweise eine selbstklebende Schaumstoff-Klebefolie, angeordnet sein.

Die Lichtleitschicht 5 und die lichtabdeckende Dekorelementschicht 7 sowie gegebenenfalls der flexible Leiter 12 und die Klebeschichten 15a, 15b, 16 können insbesondere kongruent oder zumindest mit gleicher Außenkontur ausgebildet sein.

Durch die vorstehend genannten technischen Merkmale werden vorteilhafterweise potentielle Eindringstellen für Feuchtigkeit direkt ausgeschlossen und somit ein wirksamer Schutz gegen Feuchte und auch gegen Erschütterungen erzielt.

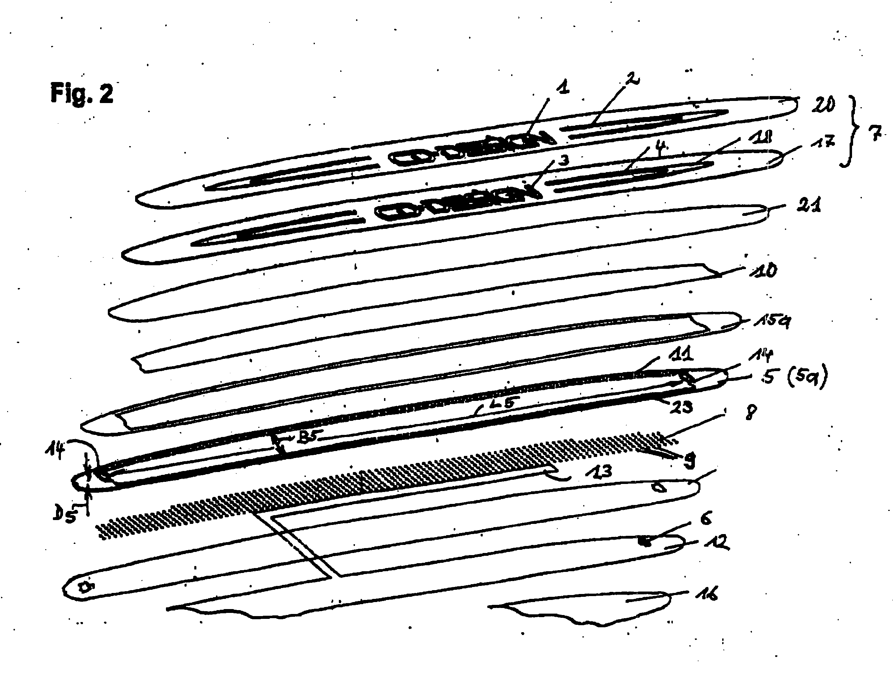

Die über der Lichtleitschicht 5 angeordnete lichtabdeckende Dekorelementschicht 7 kann - wie bereits erwähnt - aus mehreren Teilschichten bestehen. Hierbei ist ein unterschiedlicher Aufbau möglich, durch den sich das in Fig. 1 dargestellte Ausführungsbeispiel der Erfindung von dem in Fig. 2 dargestellten Beispiel unterscheidet.

Sowohl in Fig. 1 als auch in Fig. 2 umfasst die lichtabdeckende Dekorelementschicht 7 eine - es könnten auch zwei oder mehr sein - durchsichtige Kunststoff-Teilschicht 17, die beispielsweise aus Polymethacrylsäuremethylester (PMMA) bestehen kann.

In der Ausführung gemäß Fig. 1 sind die lichtundurchlässigen Bereiche der lichtabdeckenden Dekorelementschicht 7 durch zwei in unterschiedlichen Ebenen auf der Kunststoff-Teilschicht 17 aufgebrachte Druckschichten 18, 19 gebildet. Eine erste Druckschicht 18 ist auf die Oberseite der Kunststoff-Teitschicht 17, eine zweite Druckschicht 19 auf deren Unterseite aufgebracht. Wie bereits dargestellt, können mit den Dekorelementen 1, 2, 3, 4 unterschiedliche Motive dadurch erreicht werden, dass bestimmte Bereiche abgedeckt sind und andere nicht. Die nicht abgedeckten Bereiche werden durchleuchtet. Durch das Aufbringen von Abdeckschichten in unterschiedlichen Ebenen, wie der beiden Druckschichten 18, 19 kann dabei vorteilhaftorweise beim Betrachter ein plastisch wirkender Eindruck, also ein sogenannter 3D-Effekt, erzielt werden.

Alternativ oder zusätzlich können - wie in Fig. 2 dargestellt - die lichtundurchlässigen Bereiche der lichtabdeckenden Dekorelementschicht 7 auch durch eine, insbesondere aus Metall, wie Aluminium, bestehende Auflageschicht 20 gebildet sein. Die Auflageschicht 20 kann dabei bevorzugt eine Dicke von etwa 0,3 bis 1,0 mm aufweisen. Das Abdecken kann also durch ein nicht transparentes Material erfolgen und/oder durch ein Material, welches ursprünglich transparent ist und durch Bearbeitung, z. B. durch Farbauftrag, seine Transparenz verliert.

Durch eine zusätzlich optional vorhandene lasierende Farbschicht 21 (für beide Ausführungsformen dargestellt), die auf die lichtabdeckende Dekorelementschicht 7, insbesondere auf deren Unterseite, aufgebracht ist, können beliebige Licht-Farbtöne dargestellt werden.

Schließlich kann, wie Fig. 1 zeigt, der erfindungsgemäße Dekorationskörper eine zumindest oberseitig angeordnete lichtdurchlässige Schutzschicht 22 aufweisen, die vorzugsweise durch eine die Oberfläche abdeckende Vergussmasse oder ein Harz, das Insbesondere aus Polyurethan oder Acrylat bestehen kann, gebildet ist. Der Überzug kann beispielsweise mit einer Schichtdicke von etwa 0,15 bis 2,0 mm aufgetragen sein und auch aus zwei unter Aushärtung miteinander reagierenden Komponenten bestehen, wie dies z. B. bei Epoxidharzen der Fall ist. Die Schutzschicht 22 kann auch die Seitenkanten des Dekorationskörpers bedecken.

Was die Lichtleitschicht 5 betrifft, so ist diese mit Vorteil derart aufgebaut, dass sie nahezu vollständig von der Umgebung optisch entkoppelt ist und dadurch nur marginale Lichtverluste durch Streulicht erfährt. In den in Fig. 1 und 2 dargestellten Ausführungen der Erfindung ist die Lichtleitschicht 5 aus einer lichtieitenden Platte 5a gebildet, deren Dicke D5 etwa im Bereich von 0,5 bis 10 mm liegen kann. Hierbei kann nun zur Erzielung einer optimalen optischen Entkopplung vorgesehen sein, dass die lichtleitende Platte 5a in ihrer Deckfläche eine am Rand 11 ausgebildete, vorzugsweise nahezu vollständig umlaufende, Nut 23 aufweist, deren Tiefe insbesondere 80 bis 95 Prozent der Dicke D5 der Lichtleitschicht 5, vorzugsweise aber mindestens 0,2 mm, beträgt

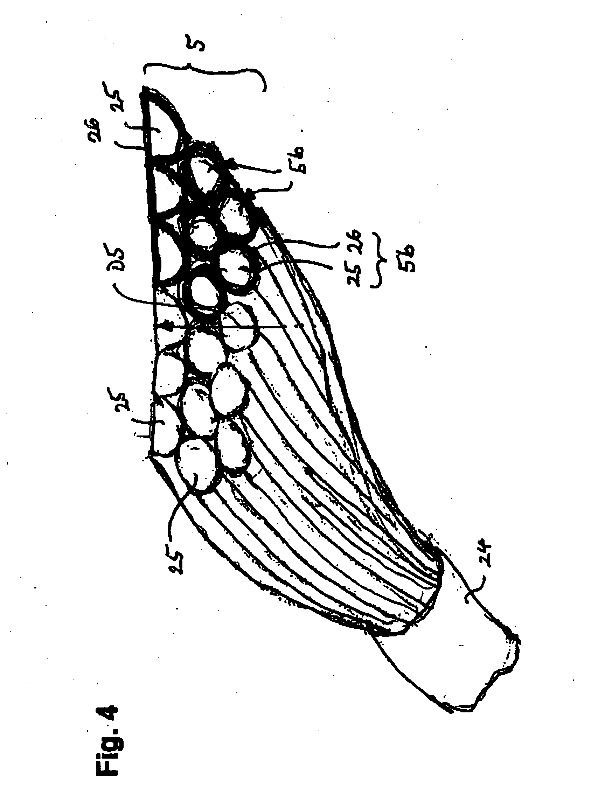

In einer alternativ ausgebildeten Lichtleitschicht 5 eines erfindungsgemäßen Dekorationskörpers, wie sie Fig. 4 zeigt, kann auch vorgesehen sein, dass diese Lichtleitschicht 5 aus einem, insbesondere flächig aufgefächerten, Bündel von Lichtleitfasern 5b gebildet ist, die in einer Lage oder in mehreren Lagen übereinander angeordnet sind. Die Dicke D5 der Schicht 5 kann dabei kleiner sein als bei einer Platte 5a und etwa eine Untergrenze im Bereich von 0,15 mm haben.

Die Lichtieitfasern 5b münden in der dargestellten Ausführung in ein Lichtleitkabel, bei dem es sich beispielsweise um ein Glasfaserkabel 24 handeln kann. Derartige Glasfaserkabel 24 sind üblicherweise aus hochtransparenten Glasfasern geblldet, die zumeist aus hochreinem Kieselglas bestehen und mit einem Glas niedrigerer Brechung ummantelt sind. Die Lichtleitfaser 5b selbst besteht aus einem Kern (Core) 25, einem Mantel (Cladding) 26 und gegebenenfalls einer Schutzbeschichtung (Coating und/oder Buffer).

Der lichtführende Kern 25 dient z. B. zum Übertragen eines optischen Signals. Der Mantel 26 hat eine niedrigere optische Brechzahl als der Kern 25 und bewirkt dadurch eine Totalreflexion an der Grenzschicht und somit eine vorwiegende Führung der Strahlung im Kern 25 des Lichtwellenleiters. Ein Teil der Lichtwelle tritt auch im Mantel 26 auf, nicht jedoch an dessen Außenoberfläche.

Die äußere Beschichtung bildet einen Schutz vor mechanischen Beschädigungen und besteht meist aus einer 150 - 500 µm dicken Lackierung aus speziellem Kunststoff (meist Polyimid, Acryl oder Silikon), die die Faser 5b auch vor Feuchtigkeit schützt. Ohne die Beschichtung würden die auf der Faseroberfläche vorhandenen Mikrorisse zu einer erheblichen Verringerung der mechanischen Belastbarkeit führen.

Während in der rechten Hälfte der zeichnerischen Darstellung dieser vollständige Aufbau der Lichtleitfasern 5b vorliegt, zeigt die linke Hälfte einen Faseraufbau, bei dem der Mantel 26 bzw. die äußere Beschichtung entfernt ist. Dadurch tritt keine Totalreflexion mehr auf und das Licht kann aus der Lichtleitfaser 5b heraus abgestrahlt, also zur illuminierung der Dekorelementschicht 7 optisch ausgekoppelt, werden.

Wie bereits aus den vorstehenden Erläuterungen hervorgeht, ist die Erfindung nicht auf die dargestellten Ausführungsbeispiele beschränkt, sondern umfasst auch alle im Sinne der Erfindung gleichwirkenden Ausführungen. So muss es sich bei den Bildpunkten 9 nicht zwangsläufig um kreisförmige Bildelemente handeln, sondern die "Punkte" können z. B. auch eine ovale oder eckige Form bzw. Kreuzform aufweisen, Die Reflexionsschicht 8 und die Streuschicht 10 müssen nicht zwangläufig durch einen Druckprozess aufgebracht werden, sondern könnten wie dies eingangs bei der Darstellung des bekannten Standes der Technik ausgeführt wurde, durch ein anderes geeignetes Verfahren erzeugt werden, wie z. B. durch Lasern, Gravur oder Fräsen. Beim Einsatz von Lichtleitfasern 5b können solche aus verschiedenartigem Material, von verschiedenartiger Stärke und mit verschiedenartigem Querschnitt Verwendung finden, wie dies in Fig. 4 schon durch die Darstellung von Lichtleitfasern 5b mit einem D- und einem O-Querschnitt angedeutet ist. Hierbei erscheint auch ein Vergießen der Fasern grundsätzlich möglich.

Der erfindungsgemäße Dekorationskörper kann auch geometrisch verschieden von den dargestellten Ausführungsbeispielen ausgebildet sein. So kann es sich beispielsweise auch um einen Würfel, eine Kugel oder ein anderes dreidimensionales Objekt handeln.

Der Anwendungsbereich des erfindungsgemäßen Dekorationskörpers beschränkt sich nicht auf die Kraftfahrzeugtechnik, sondern kann mit Vorteil auch in der Möbelindustrie, im architektonischen Bereich, in der Werbung oder auf weiteren geeigneten Gebieten liegen.

### Bezugszeichen

- 1, 2, 3, 4: Dekorelemente
- 5: Lichtleitschicht
- 5a: Platte von 5
- 5b: Lichtleitfaser von 5
- 6: Leuchtmittel, LED
- 7: Dekorelementschicht mit 1, 2, 3, 4
- 8: Reflexionsschicht
- 9: Bildpunkt in 8
- 10: Streuschicht
- 11: Rand von 5
- 12: flexibler Leiter (FPC)
- 13: Anschlussleiter von 12
- 14: Aufnahmetasche für 6 in 5
- 15a, 15b: Klebeschichten (Selbstklebefolien)
- 16: Schaumstoff-Klebefolle
- 17: durchsichtige Teilschicht von 7
- 18, 19: Druckschichten von 7
- 20: Auflageschicht von 7
- 21: Farbschicht
- 22: Schutzschicht
- 23: Nut in 5
- 24: Glasfaserkabel
- 25: Kem (Core) von 5b
- 26: Mantel von 5b

- A, B, C, D, E: Bereiche in 8
- A₁, A₂, A₃: (senkrechte) Abstände zwischen A, B, C, D, E und 6
- B5: Breite von 5
- D5: Dicke von 5
- L5: (optisch wirksame) Länge von 5

- µ₀: senkrechte Abstrahlungsrichtung von 6
- µ₁: Winkellage von D zu µ₀
- µ₂: Winkellage von E zu µ₀

## Patentansprüche

1. Dekorationskörper mit beleuchtbaren Dekorelementen (1, 2, 3, 4), insbesondere Einstiegsleiste zur Anordnung an einer Karosserie eines Fahrzeugs, vorzugsweise im Bereich eines Einstiegsschwellers, umfassend eine Lichtleitschicht (5), in die durch ein seitlich angeordnetes Leuchtmittel (6), insbesondere mindestens eine lichtemitierende Diode (LED), Licht einstrahlbar ist, eine über der Lichtleitschicht (5) angeordnete lichtabdeckende Dekorelementschicht (7) mit lichtundurchlässigen und -durchlässigen Bere i-chen, die entsprechend den Dekorelementen (1, 2, 3, 4) ausgebildet sind, und eine unter der Lichtleitschicht (5) angeordnete Reflexionsschicht (8), wobei zwischen der Lichtleitschicht (5) und der darüber angeordneten lichtabdeckenden Dekorelementschicht (7) eine lichtdurchlässige Streuschicht (10) angeordnet ist, **dadurch gekennzeichnet, dass** die lichtdurchlässige Streuschicht (10) eine grobe Fraktion von Partikeln mit einer mittleren Korngröße im Bereich von 51 bis 120 µm, vorzugsweise von 60 bis 90 µm enthält.

2. Dekorationskörper nach Anspruch 1, **dadurch gekennzeichnet, dass** die lichtdurchlässige Streuschicht (10) eine feine Fraktion von Partikeln mit einer mittleren Korngröße im Bereich von weniger als 15 µm enthält.

3. Dekorationskörper nach Anspruch 1 oder 2, **dadurch gekennzeichnet, dass** die feine Fraktion von Partikeln mit einer mittleren Korngröße im Bereich von weniger als 15 µm ein Gemisch aus einer ersten Teilfraktion von Partikeln mit einer mittleren Korngröße im Bereich von 1,8 bis 2,4 µm und aus einer zweiten Teilfraktion von Partikeln mit einer mittleren Korngröße im Bereich von 8,0 bis 12,0 µm umfasst und insbesondere aus einem Gemisch aus 35 bis 65 Teilen der ersten Teilfraktion und 65 bis 35 Teilen der zweiten Teilfraktion, vorzugsweise je zur Hälfte aus den beiden Teilfraktionen, besteht.

4. Dekorationskörper nach einem der Ansprüche 1 bis 3, **dadurch gekennzeichnet, dass** die lichtdurchlässige Streuschicht (10) zu 60 bis 95 Prozent, vorzugsweise zu 78 bis 93 Prozent, aus einem Lack, zu 2,5 bis 20 Prozent aus einer/der groben Fraktion von Partikeln mit einer mittleren Korngröße im Bereich von 30 bis 120 µm und zu 2,5 bis 20 Prozent aus einer/der feinen Fraktion von Partikeln mit einer mittleren Korngröße im B e-reich von weniger als 15 µm besteht.

5. Dekorationskörper nach einem der Ansprüche 1 bis 4, **dadurch gekennzeichnet, dass** die lichtdurchlässige Streuschicht (10) einen Transmissionsgrad von mindestens 0,5, vorzugsweise von mindestens 0,8 aufweist, und/oder einen arithmetischen Mittenrauhwert (Rₐ) von 5,0 bis 20,0 µm, vorzugsweise von 0,8 bis 14,0 µm aufweist, wobei sie insbesondere aus einem Ätzimitatlack gebildet ist.

6. Dekorationskörper nach einem der Ansprüche 1 bis 5, **dadurch gekennzeichnet, dass** die Reflexionsschicht (8) aus einer Vielzahl von Bildpunkten (9) gebildet ist, deren Dichte, Größe und/oder Lichtreflektivität in Abhängigkeit von ihrem Abstand (A₁, A₂, A₃) zum Leuchtmittel (6) eingestellt sind, bei größerem Abstand (A₂, A₃) vom Leuchtmittel (6) größer ist/sind als bei kleinerem Abstand (A₁, A₂) vom Leuchtmittel (6).

7. Dekorationskörper nach Anspruch 6, **dadurch gekennzeichnet, dass** die Dichte, Größe und/oder Lichtreflektionität der Bildpunkte in Abhängigkeit von ihrer Winkellage (µ₀, µ₁, µ₂) zum Leuchtmittel (6) eingestellt ist/sind, insbesondere bei einer größeren Winkellage (µ₂) in Bezug auf die senkrechte Abstrahlungsrichtung (µ₀) des Leuchtmittels (6) größer ist/sind als bei einer kleineren Winkellage (µ₁) in Bezug auf die senkrechte Abstrahlungsrichtung (µ₀) des Leuchtmittels (6).

8. Dekorationskörper nach Anspruch 6 oder 7, **dadurch gekennzeichnet, dass** Dichte, Größe und/oder Lichtreflektivität der Bildpunkte (9) unterhalb der lichtdurchlässigen Bereiche der lichtabdeckenden Dekorelementschicht (7) geringer ist/sind als unterhalb der lichtdurchlässigen Bereiche (5) der Dekorelementschicht (7).

9. Dekorationskörper nach einem der Ansprüche 1 bis 8, **dadurch gekennzeichnet, dass** die Reflexionsschicht (8) aus einer auf die Unterseite der Lichtleitschicht (5) aufgebrachten Druckschicht, insbesondere aus einer im Siebdruckverfahren aufgebrachten Druckschicht, oder durch eine Gravur in der Lichtleitschicht (5) gebildet ist.

10. Dekorationskörper nach einem der Ansprüche 1 bis 9, **dadurch gekennzeichnet, dass** die Lichtleitschicht (5) Aufnahmetaschen (14) für zur Illuminierung erforderliche Bauteile, insbesondere für das Leuchtmittel (6) aufweist und/oder
zumindest das Leuchtmittel (6) in die Lichtleitschicht (5) mittels eines transparenten Vergussmaterials eingegossen ist.

11. Dekorationskörper nach einem der Ansprüche 1 bis 10, **dadurch gekennzeichnet, dass** die lichtabdeckende Dekorelementschicht (7) eine oder mehr durchsichtige Kunststoff-Teilschicht(en), wie aus Polymethacrylsäuremethylester (PMMA), umfasst und/oder
eine lasierende Farbschicht (21) auf die lichtabdeckende Dekorelementschicht (7), insbesondere auf deren Unterseite, aufgebracht ist.

12. Dekorationskörper nach einem der Ansprüche 1 bis 11, **dadurch gekennzeichnet, dass** die lichtundurchlässigen Bereiche der lichtabdeckenden Dekorelementschicht (7) durch eine oder mehrere Druckschicht(en) (18, 19), insbesondere in unterschiedlichen Ebenen auf der/den Kunststoff-Teilschicht(en) angeordnete Druckschichten (18, 19), gebildet sind oder durch eine, insbesondere aus Metall, wie Aluminium, bestehende Auflageschicht (20) gebildet sind.

13. Dekorationskörper nach einem der Ansprüche 1 bis 12, **dadurch gekennzeichnet, dass** die Lichtleitschicht (5) eine Dicke (D5) im Bereich von 0,15 bis 10,0 mm aufweist.

14. Dekorationskörper nach einem der Ansprüche 1 bis 13, **gekennzeichnet durch** eine zumindest oberseitig angeordnete lichtdurchlässige Schutzschicht (22), die vorzugsweise **durch** eine die Oberfläche abdeckende Vergussmasse oder ein Harz, insbesondere aus Polyurethan oder Acrylat, gebildet ist.

## Claims

1. A decorative unit with illuminable decorative elements (1, 2, 3, 4), in particular a sill strip for positioning on the body of a vehicle, preferably in the region of a door sill, comprising a light-conducting layer (5) into which light can be radiated by an illuminant (6), in particular at least one light emitting diode (LED), disposed to the side, a light-covering decorative element layer (7) disposed over the light-conducting layer (5) with opaque and translucent regions which are designed to correspond to the decorative elements (1, 2, 3, 4), and a reflection layer (8) disposed beneath the light-conducting layer (5), a translucent dispersal layer (10) being disposed between the light-conducting layer (5) and the light-covering decorative element layer (7) disposed over the latter, **characterized in that** the translucent dispersal layer (10) contains a coarse fraction of particles with an average grain size in the region of between 51 and 120 µm, and preferably between 60 and 90 µm.

2. The decorative unit according to claim 1, **characterized in that** the translucent dispersal layer (10) contains a fine fraction of particles with an average grain size in the region of less than 15 µm.

3. The decorative unit according to claim 1 or 2, **characterized in that** the fine fraction of particles with an average grain size in the region of less than 15 µm comprises a mixture of a first part-fraction of particles with an average grain size in the region of between 1.8 and 2.4 µm and of a second part-fraction of particles with an average grain size in the region of between 8.0 and 12.0 µm, and in particular a mixture of 35 to 65 parts of the first part-fraction and 65 to 35 parts of the second part-fraction, preferably each half consisting of the two part-fractions.

4. The decorative unit according to any of claims 1 to 3, **characterized in that** the translucent dispersal layer (10) consists by 60 to 95 per cent, and preferably by 78 to 93 per cent, of a paint, by 2.5 to 20 per cent of a/the coarse fraction of particles with an average grain size in the region of between 30 and 120 µm, and by 2.5 to 20 per cent of a/the fine fraction of particles with an average grain size in the region of less than 15 µm.

5. The decorative unit according to any of claims 1 to 4, **characterized in that** the translucent dispersal layer (10) has a transmittance of at least 0.5, preferably of at least 0.8 and/or an arithmetical mean deviation of the roughness profile of 0.5 to 20.0 µm, preferably 0.8 to 14 µm and is in particular formed by an etch imitation paint.

6. The decorative unit according to any of claims 1 to 5, **characterized in that** the reflection layer (8) is formed by a plurality of pixels (9) the density, size and/or light reflectivity of which are set dependently upon their distance (A₁, A₂, A₃) from the illuminant (6), in particular with a greater distance (A₂, A₃) from the illuminant (6) is/are greater than with the smaller distance (A₁, A₂) from the illuminant.

7. The decorative unit according to claim 6, **characterized in that** the density, size and/or light reflectivity is/are set dependently upon their angular position (µ₀, µ₁, _{µ2}) in relation to the illuminant (6), in particular with a greater angular position (µ₂) in relation to the vertical radiation direction (µ₀) of the illuminant (6) is/are greater than with a smaller angular position (µ₁) in relation to the vertical radiation direction (µ₀) of the illuminant (6).

8. The decorative unit according to claim 6 or 7, **characterized in that** the density, size and/or light reflectivity of the pixels (9) beneath the translucent regions of the light-covering decorative element layer (7) is/are smaller than beneath the translucent regions (5) of the decorative element layer (7).

9. The decorative unit according to any of claims 1 to 8, **characterized in that** the reflection layer (8) is formed from a printed layer applied to the lower side of the light-conducting layer (5), in particular from a printed layer applied by the screen printing method, or by engraving in the light-conducting layer (5).

10. The decorative unit according to any of claim 1 to 9, **characterized in that** the light-conducting layer (5) has holding pockets (14) for components required for illumination, in particular for the illuminant, and/or at least the illuminant (6) is integrally moulded into the light-conducting layer (5) by means of a transparent casting material.

11. The decorative unit according to any of claims 1 to 10, **characterized in that** the light-covering decorative element layer (7) comprises one or more transparent plastic part-layer(s), made for example of polymethacrylic acid methyl ester (PMMA) and/or a transparent color layer (21) is applied to the light-covering decorative element layer (7), in particular to the lower side of the latter.

12. The decorative unit according to any of claims 1 to 11, **characterized in that** the opaque regions of the light-covering decorative element layer (7) are formed by one or more printed layer(s) (18, 19), in particular printed layers (18, 19) disposed in different planes on the plastic part-layer8s), or by a support layer (20) made of metal, such as aluminium.

13. The decorative unit according to any of claims 1 to 12, **characterized in that** the light-conduction layer (5) has a thickness (D5) in the region of between 0.15 and 10.0 mm.

14. The decorative unit according to any of claims 1 to 13, **characterized by** a translucent protective layer (22) disposed at least on the upper side, which is preferably formed by a casting component covering the surface or a resin, in particular made of polyurethane or acrylate.

## Revendications

1. Corps décoratif avec des éléments décoratifs pouvant être illuminés (1, 2, 3, 4), notamment baguette de seuil à poser sur une carrosserie de véhicule, de préférence au niveau d'un bas de caisse, comprenant une couche de guidage de lumière (5), dans laquelle de la lumière peut être irradiée par un agent lumineux placé latéralement (6), notamment au moins une diode électroluminescente (LED), une couche d'élément décoratif (7) couvrant la lumière placée sur la couche de guidage de lumière (5) avec des zones imperméables à la lumière et des zones perméables à la lumière, qui sont formées selon les éléments décoratifs (1, 2, 3, 4), et une couche réflectrice (8) placée sous la couche de guidage de lumière (5), sachant qu'entre la couche de guidage de lumière (5) et la couche d'élément décoratif (7) couvrant la lumière placée dessus, une couche de diffusion (10) perméable à la lumière est placée, **caractérisé en ce que** la couche de diffusion (10) perméable à la lumière contient une fraction grossière de particules avec une grosseur de grain moyenne comprise entre 51 et 120 µm, de préférence entre 60 et 90 µm.

2. Corps décoratif selon revendication 1, **caractérisé en ce que** la couche de diffusion perméable à la lumière (10) contient une fine fraction de particules avec une grosseur de grain moyenne de moins de 15 µm.

3. Corps décoratif selon revendication 1 ou 2, **caractérisé en ce que** la fine fraction de particules avec une grosseur de grain moyenne de moins de 15 µm comprend un mélange issu d'une première fraction partielle de particules avec une grosseur de grain moyenne comprise entre 1,8 et 2,4 µm et issu d'une deuxième fraction partielle de particules avec une grosseur de grain moyenne comprise entre 8,0 et 12,0 µm et est notamment constitué d'un mélange de 35 à 65 parties de la première fraction partielle et 65 à 35 partie de la deuxième fraction partielle, de préférence de préférence respectivement pour moitié des deux fractions partielles.

4. Corps décoratif selon l'une des revendications 1 à 3, **caractérisé en ce que** la couche de diffusion perméable à la lumière (10) est composée à 60 - 95%, de préférence 78 - 93%, d'une laque, à 2,5 - 20% d'une/de la fraction grossière de particules avec une grosseur de grain moyenne comprise entre 30 et 120 µm et à 2,5 - 20 % d'une/de la fine fraction de particules avec une grosseur de grain moyenne de moins de 15 µm.

5. Corps décoratif selon l'une des revendications 1 à 4, **caractérisé en ce que** la couche de diffusion perméable à la lumière (10) présente un degré de transmission d'au moins 0,5, de préférence au moins 0,8, et/ou présente une valeur de rugosité moyenne arithmétique (Ra) de 5,0 à 20,0 µm, de préférence de 0,8 à 14,0 µm, sachant qu'elle est formée notamment à partir d'un vernis imitant la gravure par acide.

6. Corps décoratif selon l'une des revendications 1 à 5, **caractérisé en ce que** la couche réflectrice (8) est formée d'une multitude de points lumineux (9), dont l'épaisseur, la grosseur et/ou la réflectivité lumineuse sont ajustées selon leur distance (A1, A2, A3) par rapport à l'agent lumineux (6), dans le cas d'une distance plus grande (A2, A3) de l'agent lumineux (6), est /sont plus grandes que dans le cas d'une distance plus petite (A1, A2) de l'agent lumineux (6).

7. Corps décoratif selon revendication 6, **caractérisé en ce que** l'épaisseur, la grosseur et/ou la réflectivité lumineuse des points lumineux est/sont ajustées en fonction de leur position angulaire (µ0, µ1, µ2) par rapport à l'agent lumineux (6), notamment dans le cas d'une position angulaire plus grande (µ2) par rapport au sens du rayonnement vertical (µ0) de l'agent lumineux (6), est/sont plus grandes que dans le cas d'une position angulaire plus petite (µ1) par rapport au sens de rayonnement vertical (µ0) de l'agent lumineux (6).

8. Corps décoratif selon revendication 6 ou 7, **caractérisé en ce que** l'épaisseur, la grosseur et/ou la réflectivité lumineuse des points lumineux (9) sous les zones perméables à la lumière de la couche d'élément décoratif couvrant la lumière (7) est/sont plus faible/s que sous les zones perméables à la lumière (5) de la couche d'élément décoratif (7).

9. Corps décoratif selon l'une des revendications 1 à 8, **caractérisé en ce que** la couche réflectrice (8) est formée à partir d'une couche imprimée placée sur le côté inférieur de la couche de guidage de lumière (5), notamment à partir d'un procédé d'impression par sérigraphie, ou par une gravure dans la couche de guidage de lumière (5).

10. Corps décoratif selon l'une des revendications 1 à 9, **caractérisé en ce que** la couche de guidage de lumière (5) présente des sacs d'admission (14) pour les pièces de construction nécessaires à l'illumination, notamment pour l'agent lumineux (6) et/ou au moins l'agent lumineux (6) est scellé dans la couche de guidage de lumière (5) au moyen d'un matériau de coulage transparent.

11. Corps décoratif selon l'une des revendications 1 à 10, **caractérisé en ce que** la couche d'élément décoratif couvrant la lumière (7) comprend une ou plusieurs sous-couche/s transparente/s en plastique, comme en polyméthacrylate de méthyle (PMMA) et/ou une couche de couleur glacée (21) est posée sur la couche d'élément décoratif couvrant la lumière (7) notamment sur son côté inférieur.

12. Corps décoratif selon l'une des revendications 1 à 11, **caractérisé en ce que** les zones imperméables à la lumière de la couche d'élément décoratif couvrant la lumière (7) sont formées par une ou plusieurs couches imprimée/s (18, 19), notamment dans différents niveaux sur la/les couches imprimées placées sur la/les sous-couche/s en plastique, ou sont formées par une couche support existante (20) notamment en métal, comme l'aluminium.

13. Corps décoratif selon l'une des revendications 1 à 12, **caractérisé en ce que** la couche de guidage de lumière (5) présente une épaisseur (D5) comprise entre 0,15 et 10,0 mm.

14. Corps décoratif selon l'une des revendications 1 à 13, **caractérisé par** une couche de protection (22) perméable à la lumière placée au moins en haut, qui est formée de préférence par une masse de coulage ou résine couvrant la superficie, notamment en polyuréthane ou acrylate.
